# EUROPEAN PATENT SPECIFICATION

(11) **EP 1 381 536 B1**
(45) Date of publication and mention of the grant of the patent: **22.11.2006**
(21) Application number: 02733211.3
(22) Date of filing: 23.04.2002
(51) Int. Cl.: B62K 3/00, B62B 5/00

(54) **TROLLEY FOR LUGGAGE OR OTHER LOADS**
TRANSPORTWAGEN FÜR GEPÄCK ODER ÄHNLICHES
CHARIOT POUR LE TRANSPORT DE BAGAGES ET D'AUTRES CHARGES

(30) Priority: 23.04.2001 IT LE20010004 U
(43) Date of publication of application: 21.01.2004
(73) Proprietor: Nimis, Giuseppe, 25025 Desenzano del Garda BS (IT)
(72) Inventor: Nimis, Giuseppe, 25025 Desenzano del Garda BS (IT)
(74) Representative: Pizzoli, Antonio
(86) International application number: PCT/IT2002/000260
(87) International publication number: WO 2002/085695

(56) References cited:
- WO-A-01/19213
- DE-A- 19 514 028
- DE-A- 19 849 361
- US-A- 3 485 314
- US-A- 4 509 349
- PATENT ABSTRACTS OF JAPAN vol. 1996, no. 08, 30 August 1996 (1996-08-30) & JP 08 084617 A (TOKUYAMA TOMOYASU), 2 April 1996 (1996-04-02)

## Description

The present invention relates to a trolley for luggage or other loads, and in particular to a trolley which can be used for easily moving not only these loads, but also the same persons which carry out the motion.

Known trolleys comprise a horizontal support connected to a vertical support, a handle and at least one front wheel for pulling or pushing the trolley. The latter can also be integrated into a suitcase or another container, for example into a trunk or a bag. These known trolleys are often disadvantageously difficult to be pushed or pulled, especially when the load is heavy and the wheels are small for reducing the overall dimensions.

WO 01/19213 discloses a trolley integrated into a suitcase, which comprises a footboard provided with rear wheels to easily pull the suitcase. However, this known trolley is difficult to steer and takes some space assay from the suitcase.

It is therefore an object of the present invention to provide a trolley which is free from said disadvantages. Said object is achieved with a trolley, the main features of which are disclosed in the first claim and other features are disclosed in the subsequent claims.

Thanks to the footboard, the rear wheels and the steering wheel which is provided with, the trolley according to the present invention can be set in motion _ by the user, so as to obtain an effort reduction in the transport and a simultaneous higher motion speed, not only of the load, but also of the user himself

According to a particular advantageous aspect of the invention, the footboard can be folded or slid under or over the horizontal support, so as to reduce the trolley dimensions when it is not used.

According to another particular advantageous aspect of the invention, the handle, when acts as a handlebar, can be arranged in a position comfortable for the user thanks to an extensible bar and/or a joint.

According to a further particular advantageous aspect of the invention, the trolley can be provided with one or more auxiliary wheels, preferably pivoting, for improving the stability and the solidity of the trolley when used.

Finally, the trolley according to the present invention can be easily integrated into a suitcase or another container without significantly increasing the dimensions when the trolley is not used.

Further advantages and features of the trolley according to the present invention will be clear to those skilled in the art from the following detailed and non-limiting description of some embodiments thereof with reference to the attached drawings, wherein:
- figure 1 shows a front view of the trolley according to a first embodiment, in a closed position;
- figure 2 shows a perspective view of the trolley of figure 1, in an open position;
- figure 3 shows a perspective view of a container comprising the trolley according to a second embodiment similar to the first one;
- figure 4 shows a front view of the trolley according to a third embodiment, in a closed position;
- figure 5 shows a perspective view of the trolley of figure 4, in an open position; and
- figure 6 shows a perspective view of a container comprising the trolley according to a fourth embodiment similar to the third one.

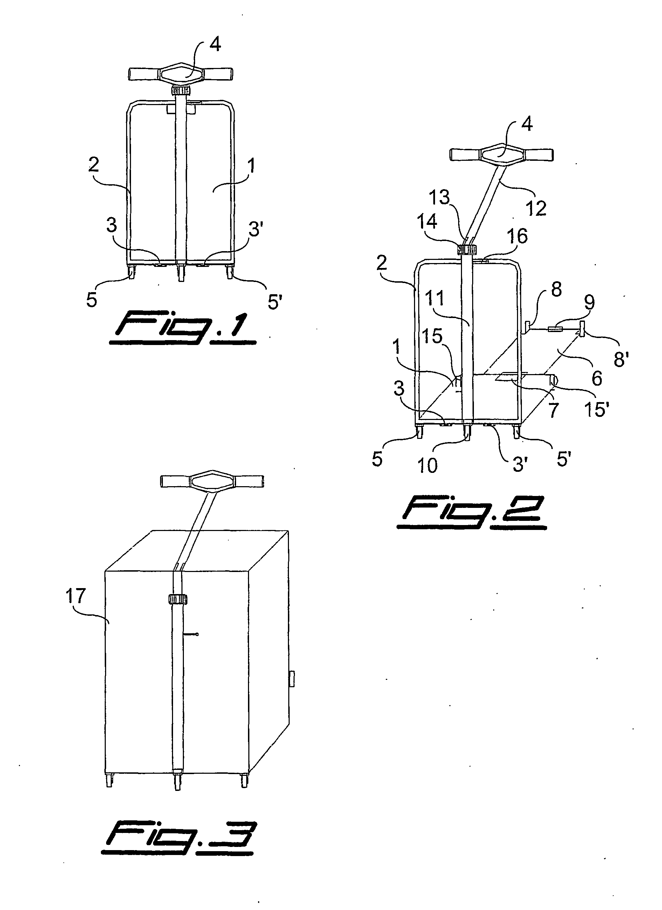

Referring to figure 1, it is seen that the trolley according to the first embodiment of the present invention comprises in a known way a horizontal support 1, consisting for example in a metal plate, on which the loads to be carried can be laid. The horizontal support 1 is connected to a vertical support 2, consisting for example in a metallic tubular frame, preferably by means of one or more hinges 3, 3'. The trolley is further provided in a known way with a handle 4 and with one or more front wheels 5, 5' for being hand-pulled by the user.

In figure 1 the trolley is closed and locked, i.e. with the horizontal support 1 folded onto the vertical support 2, so that is occupies a limited space and can be easily carried by hand, in a bag or on a shoulder, with a suitable strap (not shown in the figure).

Referring to figure 2, it is seen that the trolley according to the present embodiment of the invention suitably comprises a footboard 6 connected to the horizontal support 1, preferably by means of a hinge 7 or other mechanisms. Footboard 6 can be a plate hinged to the horizontal support 1.

In other embodiments of the invention, footboard 6 can be provided with sliding mechanisms for sliding under or over the horizontal support 1, instead of being hinged to the latter. For supporting the user's weight, footboard 6 is suitably provided with one or more rear wheels 8, 8'. Footboard 6 can also be provided with a pedal 9, which, if pressed by a user's foot, acts onto the rear wheels and/or their shaft, thus acting as a brake for slowing down or stopping the trolley.

The trolley is suitably provided with at least one steering wheel 10 connected to handle 4, which also acts as a handlebar for steering wheel 10, so as to guide the trolley itself. The steering wheel 10, in particular its fork, is connected to handle 4 by means of a shaft which is arranged in at least one hub 11 fixed to the vertical support 2. The shaft is preferably provided with a. bar 12, foldable or telescopic, which can be extended and/or inclined with respect to the shaft thanks to a joint 13, so as to bring handle 4 close to the user for a better control of the trolley. The extensible bar 12 is also provided with a lock 14, for instance threaded, for locking its extension in the desired position. For further improving the trolley stability, one or more wheels 15, 15' (shown with broken lines), preferably pivoting, can be arranged under the horizontal support 1. Also wheels 5, 5', if present, are preferably pivoting, so as to follow the direction imparted to the trolley by the steering wheel 10. For locking the shaft rotation when the trolley is pulled, hub 11 can be provided with a key 16, for instance threaded.

The load or the loads to be carried can be locked between the horizontal support 1 and the vertical support 2 by means of straps or elastic bands (not visible in the figure), for avoiding their fall and not compromising the trolley balance.

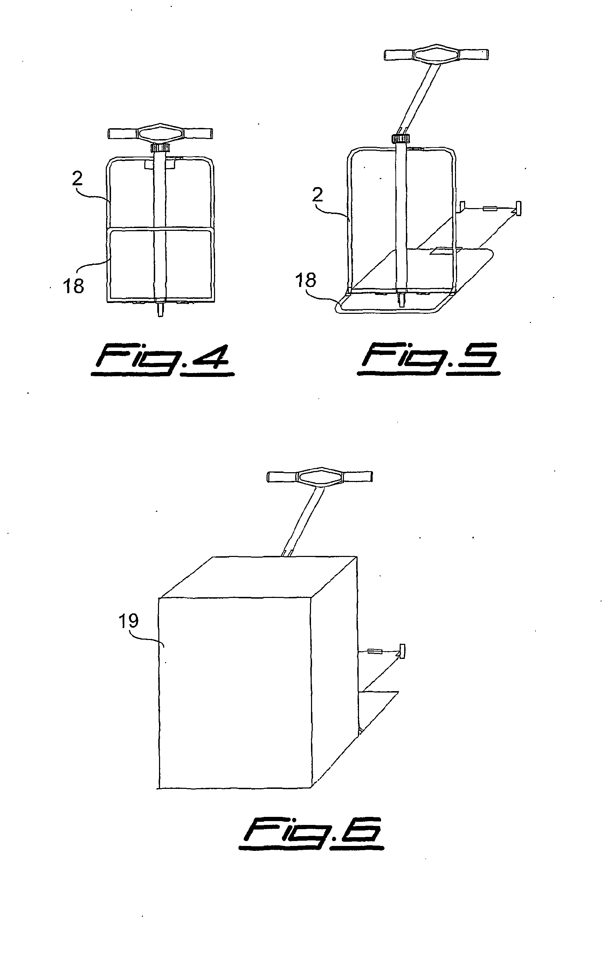

Figure 3 shows the trolley according to the second embodiment of the invention, similar to the first one, which is however provided with a container 17, the lower and front surfaces of which made up or include the horizontal support 1 and the vertical support 2, respectively.

Referring to figures 4 and 5, it is seen that the trolley according to the third embodiment of the invention comprises also a front rack 18, preferably hinged to the vertical support 2.

Figure 6 finally shows the trolley according to the fourth embodiment of the invention, similar to the third one, which is however provided with a container 19, the lower and rear surfaces of which made up or include the front rack 18 and the vertical support 2, respectively.

During the use, for employing the trolley according to the present invention, the user can:
- extend the horizontal support 1 and/or footboard 6;
- arrange the loads onto the horizontal support 1 and/or onto the front rack 18;
- adjust the extension of the extensible bar 12 by means of lock 14;
- adjust the inclination of the extensible bar 12 by means of joint 13;
- seize handle 4 with both hands;
- put a foot onto footboard 6;
- push the trolley with the free foot, braking it with pedal 9, if necessary.

Further modifications and/or additions may be made by those skilled in the art to the embodiments of the invention hereinabove described and illustrated, remaining within the scope of the invention, as defined in the claims.

## Claims

1. Trolley for luggage and other loads, which comprises a horizontal support (1) connected to a vertical support (2), a handle (4) and at least one front wheel (5, 5'; 10), wherein said horizontal support (1) comprises or is connected to a footboard (6) provided with one or more rear wheels (8, 8'), **characterized in that** said front wheel (10) is steerable with respect to the horizontal support (1) and is connected to the handle (4) for guiding the trolley, wherein said footboard (6), when not used, can be arranged adjacent to the horizontal support (1).

2. Trolley according to claim 1, **characterized in that** the horizontal support (1) is connected to the vertical support (2) by means of one or more hinges (3, 3').

3. Trolley according to one of the previous claims, **characterized in that** the footboard (6) is connected to the horizontal support (1) by means of a hinge ' (7).

4. Trolley according to claim 1 or 2, **characterized in that** the footboard (6) is connected to the horizontal support (1) by means of a sliding mechanism for sliding under or over the horizontal support (1).

5. Trolley according to one of the previous claims, **characterized in that** the footboard (6) is provided with a pedal (9) acting as a brake.

6. Trolley according to one of the previous claims, **characterized in that** the steering wheel (10) is connected to the handle (4) by means of a shaft which is arranged in at least one hub (11) fixed to the vertical support (2).

7. Trolley according to claim 6, **characterized in that** said shaft is provided with a bar (12) which can be extended with respect to the shaft.

8. Trolley according to claim 7, **characterized in that** said extensible bar (12) is provided with a lock (14) for locking its extension in the desired position.

9. Trolley according to claim 7 or 8, **characterized in that** said extensible bar (12) can be inclined with respect to the shaft by means of a joint (13).

10. Trolley according to one of claims 6 to 9, **characterized in that** the hub (11) is provided with a key (16) for locking the shaft rotation.

11. Trolley according to one of the previous claims, **characterized in that** one or more wheels (15, 15'), preferably pivoting, are arranged under the horizontal support (1).

12. Trolley according to one of the previous claims, **characterized in that** it comprises one or more pivoting front wheels (5, 5').

13. Trolley according to one of the previous claims, **characterized in that** it comprises a container (17), the lower and front surfaces of which made up or include the horizontal support (1) and the vertical support (2), respectively.

14. Trolley according to one of the previous claims, **characterized in that** it comprises a front rack (18), preferably hinged to the vertical support (2).

15. Trolley according to claim 14, **characterized in that** it comprises a container (19), the lower and rear surfaces of which made up or include the front rack (18) and the vertical support (2), respectively.

## Patentansprüche

1. Wagen für Gepäck und andere Lasten, der einen horizontalen Träger (1), der mit einem vertikalen Träger (2) verbunden ist, einen Griff (4) und mindestens ein Vorderrad (5,5';10) aufweist, wobei der horizontale Träger (1) ein Trittbrett (6) enthält oder damit verbunden ist, welches mit einem oder mehreren Hinterrädern (8,8') versehen ist, **dadurch gekennzeichnet, dass** das Vorderrad (10) relativ zu dem horizontalen Träger (1) lenkbar ist und mit dem Griff (4) verbunden ist, um den Wagen zu führen, wobei das Trittbrett (6), wenn es nicht gebraucht wird, benachbart zum horizontalen Träger (1) angeordnet werden kann.

2. Wagen nach Anspruch 1, **dadurch gekennzeichnet, dass** der horizontale Träger (1) mit dem vertikalen Träger (2) mittels eines oder mehrerer Scharniere (3,3') verbunden ist.

3. Wagen nach einem der vorhergehenden Ansprüche, **dadurch gekennzeichnet, dass** das Trittbrett (6) mit dem horizontalen Träger (1) mittels eines Scharniers (7) verbunden ist.

4. Wagen nach Anspruch 1 oder 2, **dadurch gekennzeichnet, dass** das Trittbrett (6) mit dem horizontalen Träger (1) mittels eines Gleitmechanismus zum Schieben unter oder über den horizontalen Träger (1) verbunden ist.

5. Wagen nach einem der vorhergehenden Ansprüche, **dadurch gekennzeichnet, dass** das Trittbrett (6) mit einem Pedal (9) versehen ist, welches als Bremse funktioniert.

6. Wagen nach einem der vorhergehenden Ansprüche, **dadurch gekennzeichnet, dass** das lenkende Rad (10) mit dem Griff (4) mittels einer Welle verbunden ist, welche in mindestens einer Nabe (11) angeordnet ist, die mit dem vertikalen Träger (2) verbunden ist.

7. Wagen nach Anspruch 6, **dadurch gekennzeichnet, dass** die Welle mit einem Stab (12) versehen ist, der relativ zur Welle verlängert werden kann.

8. Wagen nach Anspruch 7, **dadurch gekennzeichnet, dass** der verlängerbare Stab (1) mit einer Sperre (14) versehen ist, um seine Verlängerung in der gewünschten Stellung zu arretieren.

9. Wagen nach Anspruch 7 oder 8, **dadurch gekennzeichnet, dass** der verlängerbare Stab (12) relativ zu der Welle mittels eines Gelenks geneigt werden kann.

10. Wagen nach einem der Ansprüche 6 bis 9, **dadurch gekennzeichnet, dass** die Nabe (11) mit einem Stift bzw. Keil (16) zum Feststellen der Wellendrehung versehen ist.

11. Wagen nach einem der vorhergehenden Ansprüche, **dadurch gekennzeichnet, dass** unter dem horizontalen Träger (1) ein oder mehrere, vorzugsweise schwenkende, Räder (15,15') angeordnet sind.

12. Wagen nach einem der vorhergehenden Ansprüche, **dadurch gekennzeichnet, dass** er ein oder mehrere schwenkende Vorderräder (5,5') aufweist.

13. Wagen nach einem der vorhergehenden Ansprüche, **dadurch gekennzeichnet, dass** er einen Behälter (17) aufweist, dessen untere und vordere Oberfläche den horizontalen Träger (1) bzw. den vertikalen Träger (2) bildet oder enthält.

14. Wagen nach einem der vorhergehenden Ansprüche, **dadurch gekennzeichnet, dass** er eine vordere Ablage (18) aufweist, die vorzugsweise gelenkig mit dem vertikalen Träger (2) verbunden ist.

15. Wagen nach Anspruch 14, **dadurch gekennzeichnet, dass** er einen Behälter (19) aufweist, dessen untere und vordere Oberfläche die vordere Ablage (18) bzw. den vertikalen Träger (2) bildet oder enthält.

## Revendications

1. Chariot pour bagage et autres charges, qui comprend un support horizontal (1) connecté à un support vertical (2), une poignée (4) et au moins une roue avant (5, 5' ; 10) dans lequel ledit support horizontal (1) comprend ou est connecté à un marchepied (6) pourvu d'une ou plusieurs roue(s) arrière (8, 8'), **caractérisé en ce que** ladite roue avant (10) est orientable par rapport au support horizontal (1) et est connectée à la poignée (4) pour guider le chariot, dans lequel ledit marchepied (6), quand il n'est pas utilisé, peut être disposé de façon adjacente au support horizontal (1).

2. Chariot selon la revendication 1, **caractérisé en ce que** le support horizontal (1) est connecté au support vertical (2) au moyen d'une ou plusieurs charnière(s) (3, 3').

3. Chariot selon l'une des revendications précédentes, **caractérisé en ce que** le marchepied (6) est connecté au support horizontal (1) au moyen d'une charnière (7).

4. Chariot selon la revendication 1 ou 2, **caractérisé en ce que** le marchepied (6) est connecté au support horizontal (1) au moyen d'un mécanisme coulissant pour coulisser sous ou sur le support horizontal (1).

5. Chariot selon l'une quelconque des revendications précédentes, **caractérisé en ce que** le marchepied (6) est pourvu d'une pédale (9) agissant à titre de frein.

6. Chariot selon l'une des revendications précédentes, **caractérisé en ce que** la roue orientable (10) est connectée à la poignée (4) au moyen d'un arbre qui est disposé dans au moins un moyeu (11) fixé au support vertical (2).

7. Chariot selon la revendication 6, **caractérisé en ce que** ledit arbre est pourvu d'une barre (12) qui peut être étendue par rapport à l'arbre.

8. Chariot selon la revendication 7, **caractérisé en ce que** ladite barre extensible (12) est pourvue d'un moyen de blocage (14) pour bloquer son extension dans la position désirée.

9. Chariot selon la revendication 7 ou 8, **caractérisé en ce que** ladite barre extensible (12) peut être inclinée par rapport à l'arbre au moyen d'une articulation (13).

10. Chariot selon l'une des revendications 6 à 9, **caractérisé en ce que** le moyeu (11) est pourvu d'une clavette (16) pour bloquer la rotation de l'arbre.

11. Chariot selon l'une des revendications précédentes, **caractérisé en ce que** une ou plusieurs roue(s) (15, 15') de préférence pivotante(s) sont disposées sous le support horizontal (1).

12. Chariot selon l'une des revendications précédentes, **caractérisé en ce qu'**il comprend une ou plusieurs roue(s) avant pivotante(s) (5, 5').

13. Chariot selon l'une des revendications précédentes, **caractérisé en ce qu'**il comprend un container (17) dont les surfaces inférieure et avant sont composées de ou comprennent respectivement le support horizontal (1) et le support vertical (2).

14. Chariot selon l'une des revendications précédentes, **caractérisé en ce qu'**il comprend un porte bagage avant (18), de préférence articulé avec le support vertical (2).

15. Chariot selon la revendication 14, **caractérisé en ce qu'**il comprend un container (19) dont les surfaces inférieure et arrière sont composées de ou comprennent respectivement le porte bagage avant (18) et le support vertical (2).
